# EUROPÄISCHE PATENTSCHRIFT

(11) **EP 3 009 956 B1**
(45) Veröffentlichungstag und Bekanntmachung des Hinweises auf die Patenterteilung: **14.09.2016**
(21) Anmeldenummer: 14188628.3
(22) Anmeldetag: 13.10.2014
(51) Int. Cl.: G06K 7/10

(54) **Verfahren zum Erkennen ob sich ein Transponder eines RFID Systems in einem Grenzbereich befindet, RFID-System und Sicherheitsschalter**
Method for detecting whether a transponder of an RFID system is in a boundary area, RFID system and safety switch
Procédé permettant de détecter si un transpondeur d'un système RFID se trouve dans une zone limite, système RFID et commutateur de sécurité

(43) Veröffentlichungstag der Anmeldung: 20.04.2016
(73) Patentinhaber: SICK AG, 79183 Waldkirch/Breisgau (DE)
(72) Erfinder: Phay, Victor Kok Heng, Singapore 507082 (SG)
(74) Vertreter: Manitz, Finsterwald & Partner GbR

(56) Entgegenhaltungen:
- EP-A1- 2 196 947
- US-A1- 2014 035 731

## Beschreibung

Die vorliegende Erfindung betrifft ein Verfahren zum Erkennen, ob sich ein Transponder eines ein Lesegerät und den Transponder umfassenden RFID-Systems in einem Grenzbereich befindet. Ferner umfasst die Erfindung ein RFID-System sowie einen Sicherheitsschalter.

RFID-Elemente (Radio Frequency Identification) werden in Sender/Empfänger-Systemen zum automatischen und berührungslosen Identifizieren und/oder Lokalisieren von Objekten mit Radiowellen verwendet. Ein RFID-System umfasst typischerweise zunächst einen Transponder (auch als "Tag" oder "Funketikett" bezeichnet), der eine Antenne umfasst und sich am oder im Objekt befindet. Er umfasst in der Regel einen kennzeichnenden Code, der über die Antenne von einem Lesegerät des RFID Systems (auch als "Transceiver" bezeichnet) abgefragt werden kann. Der Transceiver umfasst dazu ebenfalls eine Antenne und einen Transceiverschaltkreis zum Auslesen dieser Kennung vom Transponder. Zum Auslesen der Kennung von dem Transponder erzeugt das Lesegerät typischerweise magnetische Wechselfelder, um Signale an den Transponder zu übertragen. Der Transponder ist dazu ausgebildet nach Erhalt eines entsprechenden Signals vom Lesegerät ein Daten, insbesondere die Kennung, umfassendes Signal als Antwort an das Lesegerät zurückzusenden, welches dieses an ein System (z.B. ein Computersystem) zur weiteren Verwertung weiterleiten bzw. mittels eines Mikrocontrollers selber auswerten kann. Der Begriff des Zurücksendens wird hier auch verwendet, wenn der Transponder ausgestaltet ist, das Magnetfeld des Lesegerätes zu beeinflussen, ohne selbst ein Magnetfeld zu erzeugen. Diese Beeinflussung wird dann vom Lesegerät detektiert.

Bei RFID-Systemen geringer Reichweite (typischerweise von 20 mm Reichweite), erzeugt das Lesegerät magnetische Wechselfelder, die nicht nur zum Übertragen der Daten vorgesehen sind, sondern oftmals auch dazu dienen, den Transponder mit Energie zu versorgen.

Diese Reichweite ist zum einen von der Umgebung abhängig, in der das Lesegerät verwendet wird. Wenn ein Lesegerät z.B. an einem metallischen Träger installiert ist, kann dieser die magnetische Kopplung zwischen dem Lesegerät und dem Tag beeinflussen, so dass die Reichweite reduziert wird.

Ferner können Temperaturunterschiede (z.B. zu verschiedenen Tageszeiten) die Reichweite beeinflussen. Befindet sich der Transponder am Rande dieser Reichweite, sendet der Transponder zwar weiterhin Signale aus, die vom Lesegerät empfangen werden, jedoch können diese fehlerhaft sein. Vor allem bei gefährlichen Maschinen könnten hierdurch gefährliche Situationen entstehen, wenn zum Beispiel Zutritte erlaubt, die verhindert, bzw. Zutritte verweigert werden, die erlaubt werden sollten. In der Konsequenz wird die Maschine aus Vorsichtsgründen in den sicheren Zustand abgestellt. Dieser Einfluss auf die Verfügbarkeit ist nicht erwünscht.

Um einzustufen, ob die übertragenen Signale von ausreichend guter Qualität sind, gibt es z.B. in kabellosen Kommunikationsanwendungen den sogenannten Received Signal Strength Indicator (RSSI) als einen Indikator für die Empfangsfeldstärke von kabellosen Kommunikationsanwendungen. Der RSSI hat keine festgelegte Einheit, so dass der Wert des Vergleichs in Abhängigkeit von der jeweiligen Anwendung interpretiert werden muss. Hierbei entspricht ein höherer Wert einem besseren Empfang. Der RSSI wird in Kommunikationsanwendungen, die im Zwischenfrequenz (ZF)-Bereich arbeiten, vor dem Verstärken und Demodulieren bestimmt. RFID-Systeme, die im Niederfrequenzbereich (von z.B. 125 kHz) arbeiten, weisen jedoch nur einfache Schaltungen auf, so dass hier eine RSSI-Bestimmung nicht einfach implementiert werden kann.

Ferner ist die empfangene Signalstärke bei Erfassungsbereichen von ≤ 20 mm sehr gering, so dass sich kleinste Fluktuationen in der Signalstärke negativ auswirken könnten. Auch würde sich aufgrund der geringen empfangenen Signalstärke bei verschiedenen Umgebungen der RSSI drastisch ändern, so dass dieser insbesondere bei RFID-Systemen, die z.B. mit 125 kHz betrieben werden, zu ungenau ist.

Die EP 2 196 947 A1 beschreibt ein Verfahren welches in einem RFID-System verwendet werden kann, um in einem ein Lesegerät und ein RFID-Tag umfassenden RFID-System den Zustand der Kommunikation zwischen Lesegerät und RFID-Tag zu bestimmen und zu beurteilen. Die US 2014/035731 lehrt die Verwendung eines RFID-Systems, um die Qualität einer Sendeverbindung zu beurteilen.

Es ist daher die Aufgabe der vorliegenden Erfindung, ein Verfahren anzugeben, mit dem zuverlässig erkannt werden kann, ob sich das RFID-System in einem Grenzbereich befindet, in dem nicht mehr sicher ist, dass die Datenübertagung zwischen Transponder und Lesegerät (beziehungsweise umgekehrt) von ausreichender Qualität ist.

Diese Aufgabe wird durch ein Verfahren gemäß Anspruch 1 gelöst.

Erfindungsgemäß wird in einem Verfahren zum Erkennen, ob sich ein Transponder eines ein Lesegerät und den Transponder umfassenden RFID-Systems in einem Grenzbereich befindet, ein Vergleich mit zumindest einem Schwellwert vorgenommen, wobei das Lesegerät den Transponder mit Energie versorgt, wobei der Grenzbereich einen Bereich umfasst, in dem der Transponder durch die vom Lesegerät erzeugten Magnetfeld übertragenen Energie nicht vollständig geladen ist und wobei eine Bitfehlerrate von zwischen Transponder und Lesegerät übermittelten Signalen bestimmt wird und zumindest der Schwellwert abgeprüft, der eine vorgegebene maximale Bitfehlerrate (fehlerhafte Bits pro Zeit) bei zwischen Transponder und Lesegerät übermittelten Signalen umfasst. Dazu wird die Bitfehlerrate von entweder am Transponder oder am Lesegerät empfangenen Signalen bestimmt und mit dem Schwellwert verglichen.

Dadurch dass das Lesegerät den Transponder mit Energie versorgt, wird der Transponder aufgeladen, um die Übertragung der darin enthaltenen Kennung zu ermöglichen.

Die Bitfehlerrate bei der Übertragung von Signalen zwischen dem Transponder und dem Lesegerät ist dann wesentlich davon abhängig, wie stark der Transponder durch die vom Lesegerät übermittelte Energie aufgeladen ist. Eine Änderung der Umgebung, in dem das System betrieben wird, hat auf die magnetische Kopplung zwischen Lesegerät und Transponder Einfluss, so dass die Aufladung des Transponders mit Energie, die vom Lesegerät übermittelt wird, unterschiedlich stark ist. Insofern kann ein das derart ausgestaltete Verfahren ausführendes RFID-System ohne eine spezifische Eichung am Einsatzort in verschiedenen Umgebungen eingesetzt werden, weil der Schwellwert ohne Berücksichtigung der tatsächlichen Umgebung gewählt ist und nur die tatsächliche Qualität der übermittelten beziehungsweise empfangenen Daten betrifft.

Das Erkennen, ob sich ein Transponder in einem Grenzbereich befindet, erlaubt es, Bereiche zu erkennen, in denen fehlerhafte Signale befürchtet werden müssen. Wenn ein solcher Bereich erkannt wird, kann einem Anwender zum Beispiel durch ein optisches oder akustisches Warnsignal angezeigt werden, dass eine Erfassung der Kennung, die in einem Transponder gespeichert ist, wiederholt werden sollte, da z.B. der Abstand zwischen dem Lesegerät und dem Transponder zu groß war. Es kann auch vorgesehen sein, dass ein elektrisches Warnsignal an einen Schalt- oder Datenausgang gegeben wird, das eine daraus resultierende Aktion auslöst, zum Beispiel das Abschalten einer Maschine. Ein anders ausgestaltetes Warnsignal kann auch entweder direkt oder als Aufforderung an einen Benutzer eingesetzt werden, um zu informieren, dass ein Grenzbereich erreicht ist, aber das empfangene Datensignal nicht ausreichend gut und damit sicher ist um die eigentlich mit diesem Signal auszulösende Aktion zu starten.

Die Bitfehlerrate ist ein sicheres Maß für die Zuverlässigkeit der Abfrage der Kennung. Sie kann auch bei niedrigen Betriebsfrequenzen des RFID-Systems leicht bestimmt werden, da keine komplizierten Auswerteschaltungen notwendig sind, die gerade bei Systemen mit niedriger Betriebsfrequenz regelmäßig nicht zum Einsatz kommen.

Insofern zeigt sich der besondere Vorteil des erfindungsgemäßen Verfahrens insbesondere bei niedrigen Betriebsfrequenzen, also insbesondere, wenn das RFID-System ausgelegt ist, Signale in einem Frequenzbereich von 100 bis 150 kHz, insbesondere von 120 bis 135 kHz, zu senden und zu empfangen.

Vorzugsweise wird die Bitfehlerrate durch einen Vergleich von mitempfangener Prüfinformation mit einer vorgegebenen Sollinformation durchgeführt. Das kann zum Beispiel eine gesondert mitgesendete Prüfinformation sein. Andererseits kann auch eine Bewertung der empfangenen Nutzdaten zum Beispiel dahingehend vorgenommen werden, ob sie einer erwarteten Information entsprechen. In diesem Fall wird die Prüfinformation von den Nutzdaten gebildet. Dazu kann z.B. die in einem Transponder gespeicherte und dem Lesegerät bekannte Kennung herangezogen werden.

Vorzugsweise wird die Bitfehlerrate in einem vorgegebenen Zeitfenster bestimmt, wobei das vorgegebene Zeitfenster vorzugsweise eine Länge im Bereich von 50 ms bis 200 ms aufweist. Zeitfenster mit einer solchen Länge sind ausreichend, um z.B. eine Chipkarte oder ein Schlüssel, die bzw. der einen Transponder enthält und die bzw. der nur für eine kurze Zeit vor ein Lesegerät gehalten wird, zu erkennen und um eine Überprüfung durchzuführen, ob die Chipkarte bzw. der Schlüssel zulässig ist.

In einem weiteren Aspekt betrifft die Erfindung ein RFID-System, das dazu ausgebildet ist, das erfindungsgemäße Verfahren auszuführen.

Die Vorteile dieses RFID-Systems entsprechen denjenigen, die bereits im Zusammenhang mit dem erfindungsgemäßen Verfahren erläutert wurden.

In einem weiteren Aspekt betrifft die vorliegende Erfindung einen Sicherheitsschalter mit einem erfindungsgemäßen RFID-System. Die Vorteile dieses Sicherheitsschalters ergeben sich aus denjenigen, die bereits im Zusammenhang mit dem erfindungsgemäßen Verfahren erläutert wurden.

Solche Sicherheitsschalter werden z.B. vorteilhafterweise zum Überwachen einer Schließposition zweier relativ zueinander beweglichen Teile verwendet. Solche zwei relativ zueinander beweglichen Teile werden z.B. in Sicherheitstüren, bei Linearverfahrachsen, Drehgestellen oder ähnlichem eingesetzt, um z.B. den Zugang zu einer gefährlichen Maschine oder auch eine gefährliche Bewegung abzusichern.

Sicherheitsschalter kommen in Anwendungen zum Einsatz, bei denen hoher Manipulationsschutz gefordert ist. Dafür wird der in dem Transponder gespeicherte Code eines Betätigers in dem Sicherheitsschalter mit dem erwarteten Code verglichen. Die Sicherheitsschalter können besonders klein ausgebildet sein und übermitteln das Ergebnis aus dem genannten Vergleich z.B. über einen binären Ausgang oder kommunizieren z.B. mit einer zentralen Auswerteeinheit in einem Schaltschrank.

Weitere vorteilhafte Maßnahmen und Ausgestaltungen der Erfindung ergeben sich aus den abhängigen Ansprüchen. Im Folgenden wird die Erfindung anhand von Ausführungsbeispielen und den beiliegenden Zeichnungen näher erläutert. In den schematischen Zeichnungen zeigen in schematischer Darstellung:
- Fig. 1: ein RFID-System,
- Fig. 2a und 2b: unterschiedliche Grenzbereiche von gleichartigen RFID-Systemen in verschiedenen Umgebungen in einer Darstellung der Bitfehlerrate gegen den Abstand des Transponders,
- Fig. 3: eine Verwendung eines erfindungsgemäßen Sicherheitsschalters.

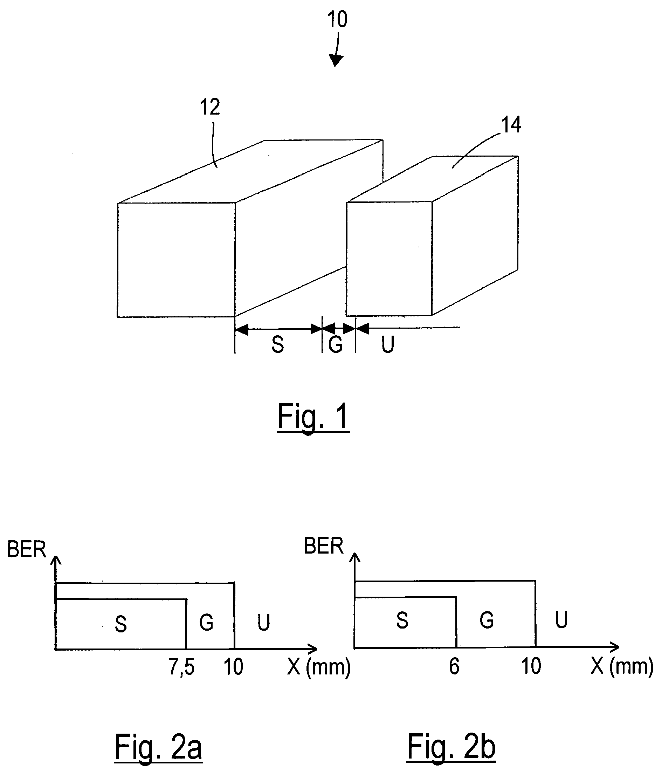

Fig. 1 zeigt eine schematische Darstellung eines RFID-Systems 10 mit einem Lesegerät 12 und einem Transponder 14. Das Lesegerät 12 (Transceiver) ist dazu ausgebildet, mit dem Transponder 14, der einen kennzeichnenden Code enthält, mittels zumindest einer Funkeinheit in an sich bekannter Weise zu kommunizieren. Der Transponder 14 kann in oder an einem Objekt (nicht gezeigt) angeordnet sein.

Im Betrieb des RFID-Systems 10 erzeugt das Lesegerät 12 in an sich bekannter Weise magnetische Wechselfelder, um Daten vom Transponder 14 abzufragen. Das Lesegerät 12 umfasst dazu einen Transceiver-Schaltkreis mittels dem das Magnetfeld erzeugt wird.

Das Magnetfeld hat eine Reichweite, innerhalb derer erste Signale für die Kommunikation mit dem Transponder 14 versendet werden. Als Antwort auf die ersten Signale versendet der Transponder 14 zweite Signale an das Lesegerät 12. Zum Auswerten der zweiten Signale kommuniziert das Lesegerät 12 zum Beispiel mit einem Mikrocontroller. Die ersten Signale können Daten umfassen, die den Transponder 14 z.B. dazu auffordern, eine dort gespeicherte Kennung mitzuteilen. Die zweiten Signale umfassen dann Daten, die diese Kennung beinhalten. Die Signale werden z.B. im Manchester 32-Format zwischen dem Transponder 14 und dem Lesegerät 12 versendet.

Der Transponder kann auch so ausgestaltet sein, das er nur das Magnetfeld des Lesegerätes beeinflusst, ohne selbst ein Magnetfeld zu erzeugen. Diese Beeinflussung wird dann vom Lesegerät im Sinne eines zurückgesendeten Signals detektiert.

Ferner ist das Lesegerät 12 dazu ausgebildet, den Transponder 14 mit Energie zu versorgen, so dass dieser zweite Signale an das Lesegerät 12 versenden kann, beziehungsweise eine Manipulation des vom Lesegerät erzeugten Magnetfeldes bewirken kann. In Abhängigkeit des Abstandes zwischen dem Lesegerät 12 und dem Transponder 14 erfährt der Transponder 14 verschiedene Ladungszustände, die abhängig davon sind, mit wieviel Energie der Transponder 14 versorgt wird. Diese Ladungszustände umfassen insbesondere "vollständig geladen", "teilweise geladen" und "nicht geladen". Je nach Ladungszustand kann der Transponder 14 Signale mehr oder weniger gut und sicher empfangen und übertragen, so dass es zu einer fehlerhaften Übermittlung kommen kann.

In einem Grenzbereich G wird der Transponder durch die vom im Lesegerät erzeugten Magnetfeld übertragene Energie nur teilweise geladen. In dem Grenzbereich G werden zwar auch Signale zwischen dem Transponder 14 und dem Lesegerät 12 übertragen, die aber möglicherweise fehlerhaft sind, da z.B. der Abstand zwischen dem Transponder 14 und dem Lesegerät 12 zu groß ist oder die Energieversorgung des Transponders 14 aus anderen Gründen nicht mehr gewährleistet ist.

Fig. 1 betrachtet einen Fall, in dem die Signalübertragung gegebenenfalls wegen eines eventuell zu großen Abstandes nicht mehr sicher funktioniert. Wie in Fig. 1 gezeigt, befindet sich der Transponder 14 dann im Grenzbereich G zwischen einem sicheren Bereich S und einem Bereich U, in dem überhaupt keine Kommunikation mehr möglich ist. Im sicheren Bereich S kann jeglicher Kommunikation, die zwischen dem Lesegerät und dem Transponder stattfindet, vertraut werden. Im Bereich U kann keine Kommunikation zwischen dem Lesegerät 12 und dem Transponder 14 mehr stattfinden.

Bei dem hier beschriebenen erfindungsgemäßen Verfahren wird die Bitfehlerrate eines übertragenen Signales bestimmt und mit einem vorgegebenen Schwellwert verglichen. Das dazu abgeprüfte Signal ist zum Beispiel die Kennung, die von dem Transponder 14 an das Lesegerät 12 auf dessen Anforderung hin übermittelt wird. Dies wird zum Beispiel im Manchester 32 Format übermittelt, so dass festgestellt werden kann, ob das Signal fehlerhaft ist, wenn es zum Beispiel nicht mehr diesem Format entspricht. Für die so zu bestimmende Bitfehlerrate wird ein Schwellwert festgelegt.

Durch den Schwellwert wird dabei vorgegeben, ab welcher Bitfehlerrate den Daten, die vom Transponder 14 übersendet werden, noch vertraut werden kann und welche Fehlerrate für das RFID-System 10 inakzeptabel ist.

In dem RFID-System 10 können dabei die folgenden Situationen auftreten:
1. Der Transponder ist in dem sicheren Bereich S platziert. Hier wird der Transponder 14 vom Lesegerät 12 vollständig mit Energie versorgt. Die Daten, die zwischen dem Transponder 14 und dem Lesegerät 12 versendet werden, haben eine Bitfehlerrate unterhalb des Schwellwertes. Der Kommunikation zwischen dem Lesegerät 12 und dem Transponder 14 kann vertraut werden.
2. Der Abstand zwischen dem Transponder 14 und dem Lesegerät 12 ist größer, so dass sich der Transponder 14 in dem Grenzbereich G befindet. Hier ist der Transponder 14 nur noch teilweise geladen und die Signale, die vom Transponder 14 an das Lesegerät 12 versendet werden, beinhalten unter Umständen fehlerhafte Daten. Auf Grund der nicht mehr vollständigen Aufladung des Transponders werden die Daten möglicherweise nicht mehr fehlerfrei übertragen, so dass auch die Bitfehlerrate steigt. Bei Überschreiten des vorgegebenen Schwellwertes wird ein Warnsignal ausgegeben, das einen Benutzer informiert, dass sich der Transponder 14 in dem Grenzbereich befindet, in dem der Kommunikation nicht mehr uneingeschränkt vertraut werden darf.
3. Ist der Abstand zwischen dem Transponder 14 und dem Lesegerät 12 noch größer (Bereich U), wird der Transponder 14 nicht mehr oder jedenfalls nicht mehr ausreichend mit Energie vom Lesegerät 12 versorgt, so dass keine Daten mehr zwischen dem Transponder 14 und dem Lesegerät 12 übermittelt werden können.

Bei einer anderen erfindungsgemäßen Verfahrensführung wird ein vom Transponder mitgesendetes Prüfsignal mit einem im Lesegerät abgelegten Referenzsignal verglichen um die Bitfehlerrate zu bestimmen. Alternativ kann das Lesegerät mit der Aufforderung an den Transponder zur Übermittlung der Kennung auch ein individuelles Signal an den Transponder schicken, das dieser dann zurücksendet um dem Lesegerät einen Vergleich zu ermöglichen.

Der Transponder ist in der Regel so ausgestaltet, dass seine Signale kontinuierlich übertragen werden. Das ist insbesondere dann der Fall, wenn der Transponder seine Signale durch eine Beeinflussung des vom Lesegerät erzeugten Magnetfeldes überträgt.

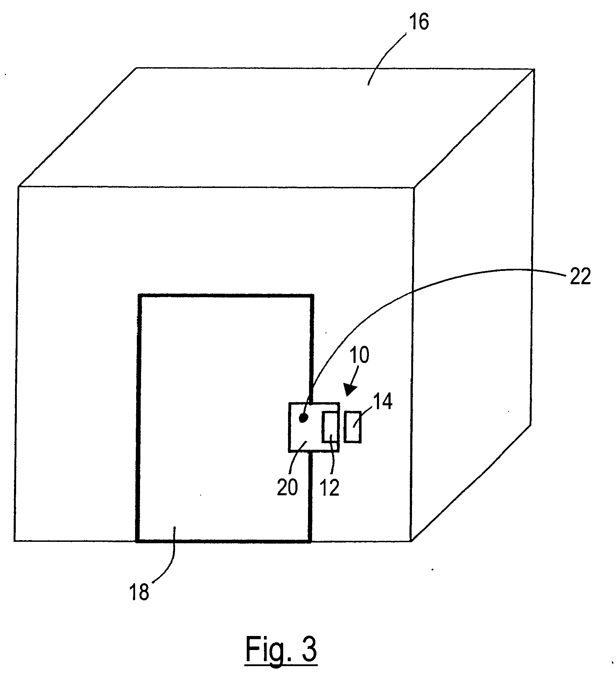

Die Signale werden vom Lesegerät in einem vorgegebenen Zeitfenster von z.B. 100 ms gemessen und die Bitfehlerrate bestimmt. Wenn die Anzahl an fehlerhaften Bits den Schwellwert überschreitet, wird ein optisches Warnsignal am Lesegerät 12 ausgegeben. Dies kann z.B. durch eine blinkende LED (Fig. 3) geschehen. Die maximale Fehleranzahl kann zum Beispiel zu 10 Fehlerbits in einem vorgegebenen Zeitfenster gewählt werden, so dass in einem Zeitfenster von 100 ms die maximale Bitfehlerrate als 100 bps (bits per second) festgelegt wird. Ist die Fehlerrate kleiner als der Grenzwert, so kann dies zum Beispiel durch eine kontinuierlich leuchtende LED angezeigt werden. Werden überhaupt keine Signale mehr empfangen, wenn der Transponder 14 zu weit weg ist, so kann dies zum Beispiel dadurch angezeigt werden, dass die LED gar nicht leuchtet.

Die Fig. 2a und 2b zeigen beispielhaft, wie sich die Bereiche S, G und U verändern können, wenn das RFID-System 10 in unterschiedlichen Umgebungen zum Einsatz kommt. Dargestellt sind die entsprechenden Bereiche für gleichartige RFID-Systeme in unterschiedlichen Umgebungen in einer Darstellung der Bitfehlerrate BER (Bit Error Rate) gegen den Abstand x des Transponders 14 vom Lesegerät 12.

In Fig. 2a ist das Lesegerät 12 und/oder der Transponder 14 z.B. an einem Kunststoffgegenstand befestigt, wohingegen es/er bei Fig. 2b z.B. an einem metallischen Gegenstand befestigt ist. Der metallische Gegenstand der Fig. 2b beeinträchtigt die magnetische Kopplung zwischen dem Transponder 14 und dem Lesegerät 12 (und damit das Aufladen des Transponders durch das Magnetfeld des Lesegerätes), so dass der sichere Bereich S der Fig. 2b kleiner ist, als bei Fig. 2a.

Es können auch zwei oder mehr Schwellwerte vorgegeben werden, die unterschiedlichen Zuständen zugeordnet werden, die unterschiedlichen Zuverlässigkeitsgraden der Kommunikation zugeordnet sind. Diese können dann durch unterschiedliche Warnsignale angezeigt werden.

Die Fig. 3 zeigt einen Sicherheitsschalter 20 mit einem RFID-System 10, der den Zugang zu einem Gebäude 16 regelt. Der Sicherheitsschalter 20 gemäß Fig. 3 ist an einer Schutztür 18 angebracht.

Um die durch den Sicherheitsschalter 20 geschützte Schutztür 18 zu öffnen, muss ein Transponder 14 verwendet werden, der den passenden Zugangscode enthält. Sobald der Transponder 14 in der Reichweite des Lesegeräts 12 mit dem korrekten Zugangscode erkannt wird, kann der Sicherheitsschalter 20 und somit die Schutztür 16 geöffnet werden. Die Erkennung dieses Codes wird unter Verwendung des erfindungsgemäßen Verfahrens durchgeführt.

Dem Lesegerät 12 ist die LED 22 zugeordnet, die ein optisches Signal ausgibt, wenn erkannt wird, dass sich der Transponder 14 in einem Grenzbereich G befindet, in dem der Kommunikation zwischen Transponder und Lesegerät nicht vertraut werden darf. Die Schutztür wird dann nicht geöffnet. Ein Benutzer ist aber informiert, dass dies nicht notwendigerweise an der Verwendung des falschen Transponders liegt, sondern nur an der mangelhaften Kommunikation.

### Bezugszeichenliste:

- 10: RFID-System
- 12: Lesegerät
- 14: Transponder
- 16: Gebäude
- 18: Schutztür
- 20: Sicherheitsschalter
- 22: LED

- S: sicherer Bereich
- G: Grenzbereich
- U: Bereich, in dem Kommunikation nicht möglich ist.
- BER: Bitfehlerrate
- x: Abstand

## Patentansprüche

1. Verfahren zum Erkennen, ob sich ein Transponder (14) eines ein Lesegerät (12) und den Transponder (14) umfassenden RFID-Systems (10) in einem Grenzbereich (G) befindet, wobei ein Vergleich mit zumindest einem Schwellwert vorgenommen wird,
wobei das Lesegerät (12) den Transponder (14) mit Energie versorgt, wobei der Grenzbereich einen Bereich umfasst, in dem der Transponder durch die vom Lesegerät erzeugten Magnetfeld übertragenen Energie nicht vollständig geladen ist und
wobei eine Bitfehlerrate von zwischen Transponder (14) und Lesegerät (12) übermittelten Signalen bestimmt wird und der zumindest eine Schwellwert eine vorgegebene maximale Bitfehlerrate bei zwischen Transponder (14) und Lesegerät (12) übermittelten Signalen umfasst.

2. Verfahren nach Anspruch 1,
**dadurch gekennzeichnet, dass**
der Grenzbereich (G) einem Bereich entspricht, in dem Signale, die zwischen dem Lesegerät (12) und/oder dem Transponder (14) gesendet und empfangen werden, fehlerhafte Signale umfassen.

3. Verfahren nach zumindest einem der vorstehenden Ansprüche,
**dadurch gekennzeichnet, dass**
das RFID-System (10) ausgelegt ist, Signale in einem Frequenzbereich von 100 bis 150 kHz, insbesondere von 120 bis 135 kHz, zu übermitteln und zu empfangen.

4. Verfahren nach zumindest einem der vorstehenden Ansprüche,
**dadurch gekennzeichnet, dass** die Bestimmung der Bitfehlerrate einen Vergleich zwischen vorgegebenen Signalen und empfangenen Signalen umfasst.

5. Verfahren nach zumindest einem der vorstehenden Ansprüche,
**dadurch gekennzeichnet, dass** die Signale Nutzdaten umfassen, die von dem RFID-System übermittelt/empfangen werden.

6. Verfahren nach zumindest einem der vorstehenden Ansprüche,
**dadurch gekennzeichnet, dass** die Bitfehlerrate durch einen Vergleich von einer mitempfangenen Prüfinformation mit einer vorgegebenen Sollinformation bestimmt wird.

7. Verfahren nach zumindest einem der vorstehenden Ansprüche,
**dadurch gekennzeichnet, dass** die Bitfehlerrate aus der Anzahl der fehlerhaften Signale in einem vorgegebenen Zeitfenster bestimmt wird, wobei das vorgegebene Zeitfenster vorzugsweise eine Länge im Bereich von 50 ms bis 200 ms aufweist.

8. Verfahren nach zumindest einem der vorstehenden Ansprüche, **dadurch gekennzeichnet, dass**
bei Erkennung, dass sich der Transponder (14) in dem Grenzbereich (G) befindet, ein Warnsignal ausgegeben wird.

9. Verfahren nach zumindest einem der vorstehenden Ansprüche,
**dadurch gekennzeichnet, dass** das Warnsignal ein optisches oder akustisches Warnsignal umfasst.

10. Verfahren nach zumindest einem der vorstehenden Ansprüche,
**dadurch gekennzeichnet, dass**
das Warnsignal ein elektrisches Warnsignal umfasst, dass vorzugsweise zur Auslösung einer Sicherungsaktion eingesetzt wird.

11. Verfahren nach zumindest einem der Ansprüche 8 bis 10,
**dadurch gekennzeichnet, dass**
das Warnsignal angibt, dass zwar ein Signal vom Transponder (14) empfangen wird, das aber nicht ausreichend sicher ist.

12. RFID-System (10) mit einem Lesegerät (12) und einem Transponder (14), wobei das RFID-System (10) dazu ausgebildet ist, ein Verfahren gemäß einem der vorstehenden Ansprüche auszuführen.

13. Sicherheitsschalter (20) mit einem RFID-System (10) gemäß Anspruch 12.

## Claims

1. A method of recognizing whether a transponder (14) of an RFID system (10) that comprises a reading device (12) and the transponder (14) is present in a boundary region (G), wherein a comparison is made with at least one threshold value,
wherein the reading device (12) supplies the transponder (14) with energy, wherein the boundary region comprises a region in which the transponder is not completely charged by the energy transferred by the magnetic field generated by the reading device, and
wherein a bit error rate of signals transmitted between the transponder (14) and the reading device (12) is determined and the at least one threshold value comprises a predefined maximum bit error rate between the signals transmitted between the transponder (14) and the reading device (12).

2. A method in accordance with claim 1,
**characterized in that**
the boundary region (G) corresponds to a region in which the signals that are transmitted and received between the reading device (12) and/or the transponder (14) include erroneous signals.

3. A method in accordance with at least one of the preceding claims,
**characterized in that**
the RFID system (10) is configured to transmit and to receive signals in a frequency range of 100 to 150 kHz, in particular of 120 to 135 kHz.

4. A method in accordance with at least one of the preceding claims,
**characterized in that**
the determination of the bit error rate comprises a comparison between predefined signals and received signals.

5. A method in accordance with at least one of the preceding claims,
**characterized in that**
the signals comprise use data that is transmitted/received by the RFID system.

6. A method in accordance with at least one of the preceding claims,
**characterized in that**
the bit error rate is determined by a comparison of test information that is also received with a predefined desired piece of information.

7. A method in accordance with at least one of the preceding claims,
**characterized in that**
the bit error rate is determined from the number of erroneous signals in a predefined window of time, wherein the predefined window of time preferably has a length in the range of 50 ms to 200 ms.

8. A method in accordance with at least one of the preceding claims,
**characterized in that**
a warning signal is output on recognition that the transponder (14) is present in the boundary region (G).

9. A method in accordance with at least one of the preceding claims,
**characterized in that**
the warning signal comprises an optical warning signal or an acoustic warning signal.

10. A method in accordance with at least one of the preceding claims,
**characterized in that**
the warning signal comprises an electric warning signal that is preferably used for the initiation of a safety action.

11. A method in accordance with at least one of the claims 8 to 10,
**characterized in that**
the warning signal states that a signal is indeed received by the transponder (14), but this is not sufficiently secure.

12. An RFID system (10) comprising a reading device (12) and a transponder (14), wherein the RFID system (10) is configured for the purpose of carrying out a method in accordance with any one of the preceding claims.

13. A safety switch (20) having an RFID system (10) in accordance with claim 12.

## Revendications

1. Procédé pour reconnaître si un transpondeur (14) d'un système RFID (10), incluant un lecteur (12) et le transpondeur (14), se trouve dans une zone limite (G), en effectuant une comparaison à au moins une valeur seuil,
dans lequel
le lecteur (12) alimente le transpondeur (14) en énergie,
la zone limite inclut une zone dans laquelle le transpondeur n'est pas complètement chargé de l'énergie transmise par le champ magnétique généré par le lecteur, et
on détermine un taux d'erreur de bit des signaux transmis entre le transpondeur (14) et le lecteur (12), et ladite au moins une valeur seuil inclut un taux d'erreur de bit maximal prédéterminé pour les signaux transmis entre le transpondeur (14) et le lecteur (12).

2. Procédé selon la revendication 1,
**caractérisé en ce que**
la zone limite (G) correspond à une zone dans laquelle les signaux émis et reçus entre le lecteur (12) et/ou le transpondeur (14) incluent des signaux entachés d'erreur.

3. Procédé selon l'une au moins des revendications précédentes,
**caractérisé en ce que**
le système RFID (10) est conçu pour transmettre et recevoir des signaux dans une gamme de fréquence de 100 à 150 kHz, en particulier de 120 à 135 kHz.

4. Procédé selon l'une au moins des revendications précédentes,
**caractérisé en ce que**
la détermination du taux d'erreur de bit inclut une comparaison de signaux prédéterminés à des signaux reçus.

5. Procédé selon l'une au moins des revendications précédentes,
**caractérisé en ce que**
les signaux incluent des données utiles qui sont transmises/reçues par le système RFID.

6. Procédé selon l'une au moins des revendications précédentes,
**caractérisé en ce que**
l'on détermine le taux d'erreur de bit par une comparaison d'une information de vérification reçue conjointement avec une information de consigne prédéterminée.

7. Procédé selon l'une au moins des revendications précédentes,
**caractérisé en ce que**
l'on détermine le taux d'erreur de bit à partir du nombre de signaux entachés d'erreur dans une fenêtre temporelle prédéterminée, la fenêtre temporelle prédéterminée présentant de préférence une longueur dans la plage de 50 ms à 200 ms.

8. Procédé selon l'une au moins des revendications précédentes,
**caractérisé en ce que**
lorsque l'on reconnaît que le transpondeur (14) se trouve dans la zone limite (G), un signal d'avertissement est émis.

9. Procédé selon l'une au moins des revendications précédentes,
**caractérisé en ce que**
le signal d'avertissement inclut un signal d'avertissement optique ou acoustique.

10. Procédé selon l'une au moins des revendications précédentes,
**caractérisé en ce que**
le signal d'avertissement inclut un signal d'avertissement électrique utilisé de préférence pour déclencher une action de sécurisation.

11. Procédé selon l'une au moins des revendications 8 à 10,
**caractérisé en ce que**
le signal d'avertissement indique qu'un signal est certes reçu par le transpondeur (14), mais qui n'est pas suffisamment sûr.

12. Système RFID (10) comportant un lecteur (12) et un transpondeur (14), le système RFID (10) étant réalisé pour mettre en oeuvre un procédé selon l'une des revendications précédentes.

13. Commutateur de sécurité (20) comportant un système RFID (10) selon la revendication 12.
